(19)

Europäisches
Patentamt
European
Patent Office
Office européen
des brevets

(11) **EP 2 184 301 A1**

(12) **EUROPEAN PATENT APPLICATION**

(43) Date of publication:
**12.05.2010 Bulletin 2010/19**

(51) Int Cl.:
***C08F 10/00*** *(2006.01)*   ***C08F 4/6592*** *(2006.01)*

(21) Application number: **08168613.1**

(22) Date of filing: **07.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Borealis AG
1220 Vienna (AT)**

(72) Inventors:
• **Severn, John
  00810 Helsinki (FI)**

• **Pakkanen, Anneli
  01120 Västerskog (FI)**
• **Hätönen, Jari
  06100 Porvoo (FI)**
• **Mustonen, Marja
  07700 Koksenkylän Saha (FI)**
• **Turpeinen, Tarja-Tuulikki
  06650 Hamari (FI)**

(74) Representative: **Maiwald Patentanwalts GmbH
Elisenhof
Elisenstrasse 3
80335 München (DE)**

(54) **Process for the preparation of a hafnium catalyst system**

(57)    Process for the preparation of a hafnium catalyst system comprising the steps of

● preparing a solution (A) comprising

- an organo-hafnium compound of formula (I)

$$L_2R_nHfX_2 \qquad (I)$$

wherein

"L" is an organic $\eta^5$-ligand,

"R" is a bridging group linking the organic ligands (L),

"X" is a ligand with a $\sigma$-bond to the hafnium (Hf),

"n" is 0,1 or 2,

- a cocatalyst (Co) comprising an element (E) of group 13 of the periodic table (IUPAC), preferably a cocatalyst (Co) comprising a compound of Al,

- a solvent (A'),

wherein the mol ratio of the element (E) of the cocatalyst (Co) and hafnium of the organo-hafnium compound [E/Hf] in the solution(A) is in the range of 220/l to 380/l,

generating an emulsion by dispersing the solution (A) in a solvent (B) immiscible with said solution (A) and in the presence of a surfactant (S)

wherein

- the solvent (B) constitutes the continuous phase of the emulsion and

- the solution (A) constitutes in form of droplets the dispersed phase of the emulsion,

- the organo-hafnium compound of formula (I) and the cocatalyst (Co) are present in the droplets, and

- the mol ratio of the element (E) of the cocatalyst (Co) and the surfactant "S" [E/S] in the emulsion is at least 60/l, and

● solidifying said dispersed phase to convert said droplets to solid particles and

● optionally recovering said particles to obtain said metallocene catalyst system.

**(Cont. next page)**

EP 2 184 301 A1

Figure 1:    catalytic activity dependent on the used amounts of components and surfactant

**Description**

The present invention is related to a new hafnium catalyst system as well as to its manufacture and use.

In the field of catalysts since many years great efforts are undertaken to further improve the catalyst types tailored for specific purposes. For instance in polymerization processes metallocene catalyst systems are widely used having many advantages.

At the beginning of the development of new metallocene catalyst systems only homogeneous catalyst systems were available. Such homogeneous catalyst systems are solutions of one or more catalyst components, e. g. a transition metal compound and optionally a cocatalyst. Homogeneous systems are used as liquids in the polymerisation process. Such systems have in general a satisfactory catalytic activity, but their problem has been that the polymer thus produced has a poor morphology (e.g. the end polymer is in a form of a fluff having a low bulk density). As a consequence, operation of slurry and gas phase reactors using a homogeneous catalyst system causes problems in practice for instance in terms of reactor fouling.

To overcome the problems of the homogeneous catalyst systems supported systems have been developed. These supported systems, known as heterogeneous catalyst systems, comprise carrier materials, such as porous organic and inorganic support materials, like silica, $MgCl_2$ or porous polymeric materials.

However, also supported catalyst systems cause problems. For instance, to mention only one among many, it is difficult to get an even distribution of the catalyst components in the porous carrier material. Further leaching of the catalyst components from the support can occur. Such drawbacks lead to an unsatisfactory polymerisation behaviour of the catalyst, and as a result the morphology of the polymer product thus obtained is also poor. Further such classic heterogeneous catalyst systems show reduced catalyst activity which is of course detrimental as the catalyst amount must be increased which in turn leads to polymer products contaminated with rather high amounts of catalyst residues.

For this reason a new metallocene catalyst system has been developed which significantly reduces the drawbacks of the known heterogeneous catalyst systems. Such new catalyst systems are self-supported, i.e. are not in need of catalytically inert support material, and are further featured by a low surface area. Such new metallocene catalyst systems enable to increase the output rate of polymers since the bulk density of the polymerized product can be increased. For the first time such new metallocene catalyst systems have been for instance described in WO 03/051934.

Also in EP 1 847 552 new self-supported metallocene catalyst systems are developed enabling the manufacture of multi-branched polypropylenes.

There is a strong need to generate metallocene catalyst systems being self-supported and being especially tailored for the manufacture for polyethylene. In particular there is a need to find out knowledge as to how the self-supported metallocene catalysts system can be obtained having excellent catalytic activity and operability in the polymerisation process (e.g. with decreased fouling) in view of the manufacture of polyethylene.

Thus the object of the present invention is to find a suitable process for the manufacture of new metallocene catalyst systems, which render possible to produce high bulk density polyethylene in an efficient manner, i.e. with rather low amounts of catalyst, and without reactor fouling.

The finding of the present invention is that the metallocene catalyst system must be self-supported, contain hafnium as the transition metal and that the amount of active metal and cocatalyst in the catalyst system must be well-balanced. A further finding of the present invention is that the new hafnium catalyst system is only obtainable in case the amount of surfactant needed for the manufacture of the new system in an emulsion solidification process is syntonised to the used amount of active metal and cocatalyst, respectively.

Thus the present invention is directed to the preparation of a hafnium catalyst system comprising the steps of

(a) preparing a solution (A) comprising

(i) an organo-hafnium compound of formula (I)

$$L_2R_nHfX_2 \qquad (I)$$

wherein

"L" is an organic $\eta^5$-ligand,
"R" is a bridging group linking the organic ligands (L),
"X" is a ligand with a $\sigma$-bond to the hafnium (Hf)
"n" is 0, 1 or 2,

(ii) a cocatalyst (Co) comprising an element (E) of group 13 of the periodic table (IUPAC), preferably a cocatalyst (Co) comprising a compound of A1,

(iii) a solvent (A'),

wherein the mol ratio of the element (E) of the cocatalyst (Co) and the hafnium of the organo-hafnium compound of formula (I) [E/Hf] in the solution (A) is in the range of 220/1 to 380/1, preferably 240/1 to 360/1, more preferably in the range 260/1 to 350/1,
(b) generating an emulsion by dispersing the solution (A) in a solvent (B) immiscible with said solution (A) and in the presence of a surfactant (S)
wherein

(i) the solvent (B) constitutes the continuous phase of the emulsion and
(ii) the solution (A) constitutes in form of droplets the dispersed phase of the emulsion,
(iii) the organo-hafnium compound of formula (I) and the cocatalyst (Co) are present in the droplets, and
(iv) the mol ratio of the element (E) of the cocatalyst (Co) and the surfactant "S" [E/S] in the emulsion is at least 60/1, more preferably 80/1, yet more preferably at least 120/1, still more preferably at least 150/1, like at least 160/1,

and
(c) solidifying said dispersed phase to convert said droplets to solid particles and
(d) optionally recovering said particles to obtain said hafnium catalyst system.

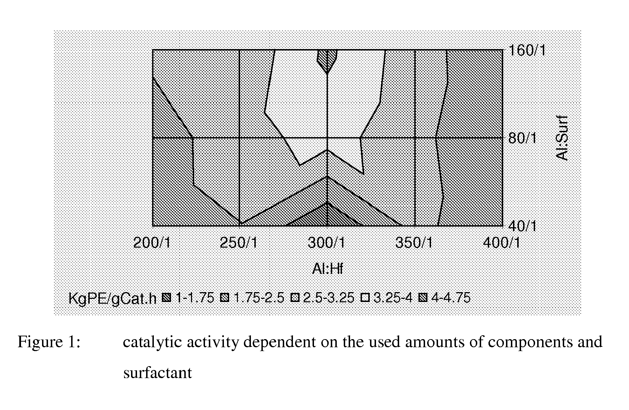

The present invention has discovered that the ratio (E/Hf) between the element (E) of the coctalyst (Co) and hafnium (Hf) as well as the ratio (E/S) between the element (E) of the cocatalyst (Co) and the surfactant (S) used in the emulsion solidification process is of critical importance to obtain an hafnium catalyst system having a high catalytic activity in polyethylene polymerisation processes (Figure 1).

It has been in particular found out that the above defined process leads to organo-hafnium systems with superior catalytic activity in the manufacture of polyethylene compared to catalyst systems obtained in a different way. But not only the catalytic activity is improved by the new process to known self-supported metallocene catalyst systems (compare tables 1 to 3) but also high bulky polyethylene in average can be produced without or with less reactor fouling with catalysts produced according to the present invention.

The improved catalytic activity is only achieved in case the hafnium catalyst system is produced as defined in the instant invention, in particular in view of the mol ratio feeds [E/Hf] and [E/S]. Thus the present invention is based in particular on the finding that polyethylene is only producible with rather low amounts of catalytically active material by

• a specific self-supported hafnium catalyst system which has been produced by
• an emulsion solidification technology using thereby
• a specific mol ratio feed of [E/Hf] and [E/S].

In the following the essential features of the present invention are described in more detail.

The term "solution" throughout the present application indicates that two or more substances are homogenous mixed. At least one of the substances is a solvent in which the other substances (the solutes) are dissolved. In the instant invention the solvent of the solution (A) is the solvent (A') as defined in more detail below, whereas the solutes of the solution (A) are at least the organo-hafnium compound of formula (I) and the cocatalyst (Co).

An "emulsion" according to this invention is a mixture of two immiscible substances. One substance (the dispersed phase) is dispersed in the other (the continuous phase) as droplets. In the present application the continuous phase is the solvent (B) and the dispersed phase (in the form of droplets) is the solution (A) containing the catalyst components.

"Surfactants" according to this invention are agents that lower the surface tension of a liquid and lower the interfacial tension between two phases, here the solution (A) and the solvent (B), and thus enable or facilitate the formation of dispersions.

More precisely, the solvent (A') of the present invention is a solvent which dissolves the components of the hafnium catalyst system, i.e. at least the organo-hafnium compound of formula (I) and the cocatalyst (Co). Preferably the solvent (A') is an organic solvent (A'). Still more preferably the organic solvent (A') is selected from the group consisting of a linear alkane, cyclic alkane, linear alkene, cyclic alkene, aromatic hydrocarbon (like toluene, benzene, ethylbenzene, propylbenzene, butylbenzene and/or xylene), and halogen-containing hydrocarbon. Toluene is in particular preferred as a solvent (A') to form the solution (A) with the components of the hafnium catalyst system.

The solvent (B) may a single solvent or a mixture of different solvents and is immiscible with the solution (A) at least at the conditions (e. g. temperatures) used during the dispersing step (b).

Preferably said solvent (B) is inert in relation to the compounds of the hafnium catalyst system to be produced.

The term "inert in relation to the compounds" means herein that the solvent (B) of the continuous phase is chemically inert, i.e. undergoes no chemical reaction with any hafnium catalyst system forming compound or hafnium catalyst system precursor forming compound (e.g. the organo-hafnium compound of formula (I) and the cocatalyst (Co)). Thus, the solid particles of the hafnium catalyst system or any precursor thereof are formed in the droplets from the compounds which originate from the dispersed phase, i.e. are provided to the emulsion in the solution (A) dispersed into the continuous phase forming solvent (B).

It is preferred that the hafnium catalyst system compounds(s) used for forming the solid hafnium catalyst system (e.g. the organo- hafnium compound of formula (I) and the cocatalyst (Co)), are not soluble in the solvent (B). Preferably, said hafnium catalyst system compounds(s) (e.g. the organo- hafnium compound of formula (I) and the cocatalyst (Co)) are essentially insoluble in said continuous phase forming solvent (B).

Accordingly the immiscible solvent (B) preferably comprises a halogenated organic solvent, particularly a fluorinated organic solvent and/or a functionalized derivative thereof, still more preferably the immiscible solvent (B) comprises a semi-, highly-or perfluorinated hydrocarbon and/or a functionalized derivative thereof. As used herein, the phrase "highly fluorinated" refers generally to a compound in which fluorine atoms constitute at least one-half of the non-carbon substituents on the carbon atoms in the molecule. Perfluorinated hydrocarbons refer to those that have all hydrogens on carbon replaced with fluorine. It is in particular preferred, that said immiscible solvent (B) comprises, i.e. consist of, a perfluorohydrocarbon or a functionalized derivative thereof, preferably C3 to C30 perfluoroalkanes, -alkenes or -cycloalkanes, more preferred C4 to C10 perfluoro-alkanes, -alkenes or - cycloalkanes, particularly preferred perfluorohexane, perfluoroheptane, perfluorooctane or perfluoro (methylcyclohexane) or a mixture thereof.

These (fluorinated) solvents (B) are chemically very inert and are very poor solvents for polar compounds such as for the solvent (A) and the hafnium catalyst system compounds(s) (e.g. the organo-hafnium compound of formula (I) and the cocatalyst (Co)). Accordingly the reactive compounds (e.g. the organo-hafnium compound of formula (I) and the cocatalyst (Co)) can be kept within the droplet phase so that no relevant reactions in the continuous phase occur, which would worsen the morphology of the solidified hafnium catalyst system particles.

Due to the above poor solvent properties of the solvent (B), the "droplet form" of the hafnium catalyst system compounds remains even if the solvent (A) used initially is removed during solidification e. g. by heating the system.

In the present invention a surfactant (S) must be used for forming the emulsion. After the formation of the emulsion system, said hafnium catalyst system is formed in situ from the hafnium catalyst system compounds, i.e. the organo- hafnium compound of formula (I) and the cocatalyst (Co), in said solution (A).

In principle, the surfactant (S) may be any suitable agent which contributes to the formation and/or stabilization of the emulsion and which does not have any adverse effect on the catalytic activity of the hafnium catalyst system. The surfactant (S) is preferably based on hydrocarbons (including polymeric hydrocarbons with a molecular weight e.g. up to 10000) optionally interrupted with (a) heteroatom(s), preferably halogenated hydrocarbons optionally having a functional group, preferably semi-, highly- or perfluorinated hydrocarbons as known in the art. Such surfactants (S) can be added to the solution (A) or alternatively during the emulsion forming. Preferably the surfactant (S) is dissolved in a solvent before adding into the inventive process preparation. In one embodiment the solvent used for the surfactant (S) is the same solvent as used a solvent (B) or at least miscible with the solvent (B).

The Surfactant (S) can also be formed by reacting a surfactant precursor bearing at least one functional group reactive with a compound present in the solution (A) or in the solvent (B) forming the continuous phase. Preferably the surfactant precursor bears at least one functional group reactive with a compound being part of solution (A), i.e. the hafnium catalyst system compounds.

Said surfactant precursor may be a halogenated hydrocarbon with at least one functional group, e.g. a highly fluorinated $C_1$ to $C_{30}$ alcohol having at least one functional group selected e.g. from -OH, -SH, -NH$_2$, -COOH, - COONH$_2$, oxides of alkenes, oxo-groups and/or any reactive derivative of these groups, which reacts e.g. with a cocatalyst (Co), such as aluminoxane. Preferably, the surfactant precursor has a terminal functionality as defined above. For instance in preferred embodiments 2,2,3,3,4,4,5,5,6,6,7,7,-dodecafluoroheptanol is used as a surfactant precursor.

The compound reacting with such a surfactant precursor is preferably also contained in the solution (A) and may be a further additive or one or more of the hafnium catalyst system compounds, preferably other than the catalytically active hafnium compound (e. g. other than the organo-hafnium compound of formula (I)). Such compound is preferably e.g. the cocatalyst (Co), such as a compound of group 13, suitably an organoaluminium compound, such as an aluminium alkyl compound optionally comprising halogen, preferably an aluminoxane compound.

The surfactant precursor can be added to the solution (A) before forming the emulsion. Alternatively the "ready" surfactant solution may be added during the formation of the emulsion. In another embodiment the surfactant may be added separately after the formation of the emulsion to the same.

Preferably the surfactant precursor is dissolved in the same solvent as used as solvent (B). This solution may preferably be added during the formation of the emulsion.

Thus in one preferred embodiment a highly fluorinated $C_{1-30}$- (suitably $C_{4-20}$- or $C_{5-10}$-) alcohol (e.g. highly fluorinated heptanol, octanol or nonanol), like 2,2,3,3,4,4,5,5,6,6,7,7,-dodecafluoroheptanol, dissolved in the same solvent as used as solvent (B), e.g. $C_4$ to $C_{18}$ perfluoro-alkanes, is reacted with the cocatalyst (Co), preferably aluminoxane, to form the surfactant (S). This surfactant is then preferably added during the formation of the emulsion.

In another preferred embodiment a solution comprising, preferably consisting of, a highly fluorinated $C_{1-30}$-(suitably $C_{4-20}$- or $C_{5-10}$-) alcohol (e.g. highly fluorinated heptanol, octanol or nonanol), like 2,2,3,3,4,4,5,5,6,6,7,7,-dodecafluoroheptanol and a solvent being the same as solvent (B), is added during the formation of the emulsion to the same.

Suitable processes for dispersing the solution (A) within the solvent (B) to form an emulsion is the use of a mechanical device as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, are used for adjusting the size of the hafnium catalyst system.

In principle any solidification method can be used for forming the solid hafnium catalyst system from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a rapid temperature change of more than 30 °C, preferably more than 35 °C. Depending on the apparatus system this change might happen within less than 10 seconds, preferably less than 6 seconds.

For further details, embodiments and examples of the continuous and dispersed phase system, emulsion formation method, and solidification methods reference is made e.g. to the international patent application WO 03/051934.

The compounds needed for the manufacture of the hafnium catalysts system is at least the organo-hafnium compound of formula (I) and the cocatalyst (Co) as described in further detail below.

One requirement in view of the hafnium compound of formula (I) is that the two organic ligands (L) are able to form a $\eta^5$-bond to the hafnium (Hf). For instance substituted or unsubstituted cycloalkyldiene ligands have the ability to form $\eta^5$-bonds to the hafnium (Hf). In particular suitable organic $\eta^5$-ligands (L) are cylopentadienyl and its derivatives. Accordingly it is preferred that the two organic $\eta^5$-ligands (L) are independently selected from the group consisting of unsubstituted cyclopentadienyl ligand, substituted cyclopentadienyl ligand, unsubstituted indenyl ligand, substituted indenyl ligand, unsubstituted fluorenyl ligand and substituted fluorenyl ligand. Even more preferred the two organic $\eta^5$-ligands (L) are independently selected from the group consisting of unsubstituted cyclopentadienyl ligand, substituted cyclopentadienyl ligand, unsubstituted indenyl ligand and substituted indenyl ligand.

As stated above the cyclopentadienyl ligand, the indenyl ligand or the fluorenyl ligand may be substituted, i.e. comprises residues. Accordingly the substituted cyclopentadienyl ligand, the substituted indenyl ligand or the substituted fluorenyl ligand may comprise (a) residue(s) selected from the group consisting of halogen, C1 to C10 alkyl, C2 to C20 alkenyl, C2 to C20 alkynyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C 1 to C20 haloalkyl. In particular preferred residues for the substituted cyclopentadienyl ligand, the substituted indenyl ligand or the substituted fluorenyl ligand are

(a) C1 to C5 alkyl, like methyl, ethyl, iso-propyl and n-butyl, in particular methyl and n-butyl, wherein the alkyl residue may form a ring with the ligand, and
(b) C6 to C10 aryl, like phenyl.

Particular suitable organic $\eta^5$-ligands (L) are cyclopentadienyl, indenyl, C1 to C6 alkyl-cyclopentadienyl, like methyl-cyclopentadienyl, for instance 1,2,4-trimethyl-cyclopentadienyl, butyl-cyclopentadienyl, like n-butly-cyclopentadienyl, C6 to C10 aryl-indenyl, like 4-phenyl-indenyl, and tetrahydroindenyl.

As stated above the two organic $\eta^5$-ligands (L) can be different or identical, however it is preferred that the two organic $\eta^5$-ligands (L) are identical. Thus it is in particular appreciated that the two organic $\eta^5$-ligands (L) are identical and selected from the group consisting of C1 to C6 alkyl-cyclopentadienyl, like methyl-cyclopentadienyl, for instance 1,2,4-trimethyl-cyclopentadienyl, butyl-cyclopentadienyl, like n-butly-cyclopentadienyl, and tetrahydroindenyl.

Further, the two organic $\eta^5$-ligands (L) can be linked via one or two bridging group(s) (R). The bridging group(s) (R) may form a bridge of 1 to 7 atoms length, like 1 to 4 atoms length, preferably with at least one heteroatom. Such heteroatom may be selected from the group consisting of silicon (Si), germanium (Ge) and oxygen (O). The atoms of the bridge may bear independently substituents, such as C1 to C20 alkyl, tri(C1 to C20 alkyl)silyl, tri(C1 to C20 alkyl) siloxy or C6 to C20 aryl.

More preferably the bridging group(s) (R) has(have) the formula (II)

$$-Y(R')_2- \qquad (II)$$

wherein

Y is C, Si or Ge, and
R' is C1 to C20 alkyl, C6-C12 aryl, C7-C12 arylalkyl or trimethylsilyl.

More preferably the organo-hafnium compound of formula (I) comprises only one bridging group (R) or no bridging group (R), i.e. n is 0 or 1, most preferably n is 0.

As a further requirement the organo-hafnium compound of formula (I) must comprise two ligands (X) σ-bonding to the hafnium (Hf). The lignads (X) are preferably independently selected from the group consisting of hydrogen, halogen, C1 to C20 alkyl, C1 to C20 alkoxy, C2 to C20 alkenyl, C2 to C20 alkinyl,C3 to C12 cycloalkyl, C6 to C20 aryl, C6 to C20 aryloxy, C7 to C20 arylalkyl, C7 to C20 arylalkenyl, -SR", -PR"$_3$, -SiR"$_3$, -OSiR"$_3$ and -NR"$_2$, wherein each R" is independently hydrogen, C1 to C20 alkyl, C2 to C20 alkenyl, C2 to C20 alkinyl, C3 to C12 cycloalkyl or C6 to C20 aryl.

For the present invention the two ligands (X) are particularly independently selected from the group consisting of halogen, C1 to C20 alkyl, C1 to C20 alkoxy, C2 to C20 alkenyl, C2 to C20 alkinyl, C6 to C10 aryl and C7 to C20 arylalkyl. Thus the two ligands (X) can be chlorine (Cl), bromine (Br), methyl, iso-propyl, n-butly, phenyl and benzyl. In preferred embodiments the two ligands (X) are identical and either chlorine (Cl) or benzyl (Bz), especially benzyl (Bz).

A preferred organo-hafnium compound of formula (I) is (nBuCp)$_2$HfBz$_2$,

wherein

nBu = n-butyl,

Bz = benzyl, and

Cp = cyclopentadienyl.

As a further requirement the inventive hafnium catalyst system must contain a cocatalyst (Co), wherein preferably the cocatalyst (Co) comprises an element of group 13 of the periodic table (IUPAC). Thus the cocatalyst (Co) comprises for instance aluminium (A1) or boron (B).

In a preferred embodiment the cocatalyst (Co) comprises a compound of A1. Examples of such cocatalyst (Co) are organo aluminium compounds, such as trialkylaluminium compound and/or aluminoxane compound.

Further aluminoxane cocatalysts are described i.a. in WO 94/28034 which is incorporated herein by reference. These are linear or cyclic oligomers of having up to 40, preferably 3 to 20, -(Al (R''')O)- repeating units (wherein R''' is hydrogen, C1 to C10-alkyl (preferably methyl) or C6 to C18-aryl or mixtures thereof).

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however the in the manufacture of the hafnium catalyst system only compounds of Al as cocatalyst (Co) are employed.

In particular preferred cocatalysts (Co) are the aluminoxanes, in particular the C1 to C10-alkylaluminoxanes, most particularly methylaluminoxane (MAO).

Of essential importance for the inventive process is that mole ratios as already indicated above are strictly kept.

Accordingly the mol ratio of the element (E) of the cocatalyst (Co) and the hafnium "M" of the hafnium compound [E/Hf] in the solution (A) is in the range of 230/1 to 380/1, preferably 240/ to 360/1, more preferably in the range 250/ to 350/1. In this context it is worth mentioning that the amount of cocatalyst (Co) used for the forming of a surfactant from a surfactant precursor does not contribute to the [E/Hf]-mole ratio.

Further it is a mandatory requirement that the mol ratio of the element (E) of the cocatalyst (Co) and the surfactant "S" [E/S] in the emulsion is at least 60/1, more preferably 80/1, yet more preferably at least 120/1, still more preferably at least 150/1, like at least 160/1.

Accordingly it is in particular appreciated that the mol ratio of the element (E) of the cocatalyst (Co) and the hafnium "M" of the hafnium compound [E/Hf] in the solution (A) is in the range 250/ to 350/1 and the mol ratio of the element (E) of the cocatalyst (Co) and the surfactant "S" [E/S] in the emulsion is at least 150/1, like at least 160/1.

Keeping the two mole ratios ([E/Hf] and [E/S]) in the process as defined in the instant invention a new hafnium catalyst system is obtainable with the desired high catalytic activity in the manufacture of polyethylene.

This new hafnium catalyst system comprises

(a) an organo-hafnium compound of formula (I)

$$L_2R_nHfX_2 \qquad (I)$$

wherein

L is an organic η$^5$-ligand,

R is a bridging group linking the organic ligands (L),

X is a ligand with a σ-bond to the transition metal (M),

n is 0, 1 or 2,

and

(b) a cocatalyst (Co) comprising an element (E) of group 13 of the periodic table (IUPAC), preferably a cocatalyst comprising a compound of Al,

wherein the hafnium catalyst system has a surface area of less than 25.0 m$^2$/g measured according to ASTM D 3663,

Preferred organo-hafnium compounds of formula (I) and a cocatalysts (Co) are those as defined above.

This new hafnium catalyst system is further featured by a catalytic activity of more than 2.5 kg PE/(g Cat * h), more preferably more than 2.7 kg PE/(g Cat * h), still more preferably more than 3.5 kg PE/(g Cat * h).

Additionally the inventive hafnium catalyst system is featured by the fact that it is self-supported, i.e. it does not comprise any catalytically inert support material, such as organic and inorganic support materials, like silica, MgCl$_2$ or porous polymeric material. As a consequence that the hafnium catalyst system is self-supported it has a rather low surface area as defined in further detail below.

A low surface area is insofar appreciated as therewith the bulk density of the produced polyethylene can be increased enabling a high throughput of material. Typically the hafnium catalyst system has a surface area measured according to the commonly known BET method with N$_2$ gas as analysis adsorptive of less than 25 m$^2$/g, more preferably of less than 20 m$^2$/g, yet more preferably of less than 15 m$^2$/g, still yet more preferably of less than 10 m$^2$/g. In some embodiments, the hafnium catalyst system in accordance with the present invention shows a surface area of 5 m$^2$/g or less.

The hafnium catalyst system can be additionally defined by the pore volume. Thus it is appreciated that the catalyst particle has a porosity of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the inventive hafnium catalyst system typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In some cases the mean particle size is in the range of 20 to 50 $\mu$m.

As stated above the new process leads to a new hafnium catalyst system with low surface area and high catalyst activity in polyethylene processes. This new catalyst process is in particular featured by the specific amounts used of organo-hafnium compound of formula (I), cocatalyst (Co) and surfactant (S).

The specific amounts of catalyst compounds are also reflected in the final hafnium catalyst system. Accordingly the new hafnium catalyst system may further be defined by that the amount of hafnium (Hf) exceeds a certain value in the hafnium catalyst system. Accordingly the amount of hafnium (Hf) within the hafnium catalyst system is prefarbly at least 0.60 wt.-%, more preferably at least 0.70 wt.-%, yet more preferably at least 0.75 wt.%. On the other hand the amount of hafnium (Hf) within the hafnium catalyst system should be not too high otherwise the catalytic activity is negatively influenced. Thus values of more than 0.95 wt.-% should be avoided. Accordingly the amount of hafnium (Hf) within the inventive hafnium catalyst system is preferably in the range of 0.60 to 0.95 wt.-%, more preferably in the range of 0.70 to 0.90 wt.-%.

Further the hafnium catalyst system may further defined by the amount of cocatalyst (Co). Accordingly the hafnium catalyst system obtained by the inventive process comprises preferably at least 29.00 wt.-%, more preferably at least 31.00 wt.-%, yet more preferably at least 32.00 wt.-%, of the element (E) of group 13 of the periodic table (IUPAC), preferably aluminium (Al) and/or boron (B), more preferably aluminium (Al), within the hafnium catalyst system.

Further the mole-ratio (E/Hf) between the element (E) of group 13 of the periodic table (IUPAC), preferably aluminium (Al) and/or boron (B), more preferably aluminium (Al), to the hafnium (Hf) is due to the applied process rather high in the new hafnium catalyst system. Accordingly the mole-ratio (E/Hf) within the hafnium catalyst system is more than 280/1, preferably at least 290/1, more preferably at least 330/1, yet more preferably at least 380/1.

Based on the above made disclosure of preparation of the hafnium catalyst system it is in particular appreciated that the hafnium catalyst system comprises

(a) an organo-hafnium compound of formula (III)

$$L_2HfX_2 \qquad (III)$$

wherein

L is selected from the group consisting of cyclopentdienyl, 1,2,4-trimethyl-cyclopentadienyl, n-butyl-cyclopentadienyl, 4-phenyl-indenyl and tetrahydroindenyl,
X is halogen, like chlorine (Cl), or C6 to C10 aryl, like benzyl,

and
(b) a cocatalyst (Co) comprising a compound of Al, preferably the cocatalyst (Co) is a trialkylaluminium compound and/or an aluminoxane compound, like C1 to C10 alkylaluminoxanes, for instance methylaluminoxane (MAO)

wherein the catalyst system has

(i) a surface area of less than 25.0 m$^2$/g, preferably less than less than 15 m$^2$/g, more preferably of less than 10 m$^2$/g measured according to ASTM D 3663,
(ii) preferably a porosity of less than 1.00 ml/g, more preferably of less than 0.50 ml/g, like less than 0.20 ml/g, measured according ASTM 4641,
(iii) an element (E) content, preferably aluminium content, of at least 29.0 wt.-%, preferably of at least 30.0 wt.-%, more preferably of at least 32.0 wt.-%, and
(iv) a hafnium (Hf) content of at least 0.60 wt.-%, more preferably of at least 0.70 wt.-%, i.e. in the range of 0.70 to 0.95 wt.-%, more preferably in the range of 0.75 to 0.90 wt.-%.

Moreover the present invention is directed to the use of the inventive hafnium catalyst system for the manufacture of polymeric material, like polyethylene.

The present invention is further described by way of examples.

## EXAMPLES

### 1. Definitions/Measuring Methods

The following definitions of terms and determination methods apply for the above general description of the invention as well as to the below examples unless otherwise defined.

**Porosity:** BET with N$_2$ gas, ASTM 4641, apparatus Micromeritics Tristar 3000; sample preparation at a temperature of 50 °C, 6 hours in vacuum.

**Surface area:** BET with N$_2$ gas ASTM D 3663, apparatus Micromeritics Tristar 3000:

sample preparation at a temperature of 50 °C, 6 hours in vacuum.

**Mean particle size** is measured with Coulter Counter LS200 at room temperature with n-heptane as medium; particle sizes below 100 nm by transmission electron microscopy

**Median particle size** (d$_{50}$) is measured with Coulter Counter LS200 at room temperature with n-heptane as medium

**Bulk density BD** of the polymer powder was determined according to ASTM D 1895-96, method A.

### ICP analysis

The elemental analysis of a catalyst was performed by taking a solid sample of mass, M, cooling over dry ice. Samples were diluted up to a known volume, V, by dissolving in nitric acid (HNO$_s$, 65 %, 5 % of V) and freshly deionised (DI) water (5 % of V). The solution was then added to hydrofluoric acid (HF, 40 %, 3 % of V), diluted with DI water up to the final volume, V, and left to stabilize for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % HNO$_3$ 3 % HF in DI water), a low standard (10 ppm Al in a solution of 5 % HNO$_3$ 3 % HF in DI water), a high standard (50 ppm Al, 50 ppm Hf, 20 ppm Zr in a solution of 5 % HNO$_3$ 3 % HF in DI water) and a quality control sample (20 ppm Al, 20 ppm Hf, 10 ppm Zr in a solution of 5 % HNO$_3$ 3 % HF in DI water). The content of hafnium was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.

The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

**EP 2 184 301 A1**

C is the concentration in ppm, related to % content by a factor of 10,000 R is the reported value from the ICP-AES
V is the total volume of dilution in ml
M is the original mass of sample in g

If dilution was required then this also needs to be taken into account by multiplication of C by the dilution factor.

**2. Preparation of the Examples:**

Preparation of catalyst system based on complex bis(n-butyl-cyclopentadienyl)hafnium dibenzyl [(n-BuCp)$_2$HfBz$_2$]

Into a reactor containing 50 ml PFC (hexadecafluoro-1,3-dimethylcyclohexane) at 0 °C a mixture of n-BuCp$_2$HfBz$_2$ and 5 ml of methylaluminoxane (MAO) and a surfactant-solution (PFPO ((2,2,3,3,4,4,5,5,6,6,7,7,8,8,9,9,9-heptadecafluorononyl)oxirane) solution in PFC (made from 1 ml PFPO and 4 ml of PFC)) were added under stirring 554 rpm, whereby an emulsion was formed. The emulsion was stirred for 15 min.
Thereafter half of the emulsion was siphoned into hot PFC. The emulsion was transferred into the 100 ml of 98°C PFC (432 rpm) by using a Teflon tube. Temperature was decreased from 98°C to 82°C while adding the emulsion. Solidification formed immediately. The mixture was let cooled down to 32°C under stirring N$_2$ for 35 min. PFC was siphoned out and the remaining red catalyst dried in N$_2$ flow at 50 °C for two hours.
The amounts of reagents used for the preparation of the inventive catalysts (Examples 1 to 6) can be taken from Table 1.
Comparative examples 7 to 11 were produced in the same manner using the amounts of reagents as disclosed in Table 2.

**Table 1:** Preparation hafnium catalyst system of the invention

| | | Ex 1 | Ex 2 | Ex 3 | Ex 4 | Ex 5 | Ex 6 |
|---|---|---|---|---|---|---|---|
| Complex amount | [mg] | 66 | 53 | 44 | 44 | 38 | 38 |
| Surfactant amount | [ml] | 0,04 | 0,08 | 0,08 | 0,04 | 0,08 | 0,04 |
| Al:Hf | [mol/mol] | 200:1 | 250:1 | 300:1 | 300:1 | 350:1 | 350:1 |
| Al:surf | [mol/mol] | 160:1 | 80:1 | 80:1 | 160:1 | 80:1 | 160:1 |

**Table 2:** Preparation hafnium catalyst system (Comparative)

| | | Ex 7 | Ex 8 | Ex 9 | Ex 10 | Ex 11 |
|---|---|---|---|---|---|---|
| Complex amount | [mg] | 66 | 53 | 33 | 33 | 33 |
| Surfactant amount | [ml] | 0,16 | 0,16 | 0,16 | 0,08 | 0,04 |
| Al:Hf | [mol/mol] | 200:1 | 250:1 | 400:1 | 400:1 | 400:1 |
| Al:surf | [mol/mol] | 40:1 | 40:1 | 40:1 | 80:1 | 160:1 |

The average particle size of catalysts of examples 1 to 13, measured by coulter method was between 15 - 30 μm.

**Example 14** - Polymerisation

All the catalyst in the series, were tested in 5 liter reactor, which was filled with 1.1, kg of propane. 37 g of 1-hexene was added along with 150 g of ethylene. Temperature was raised to 40 °C and pressure was 22.5 bar. The catalyst was injected under 30 bar N$_2$ over pressure and temperature was raised to 80 °C within 10 to 15 minutes. Pressure was kept at 38 bar (ethylene partial pressure 7-8 bar). The polymerization was continued for 60 minutes. Polymerisation results, productivity and fouling behaviour as well bulk densities of polymer are disclosed in Table 3.

**Table 3**

|  | Productivity/ kgPol/g cat.h | Fouling degree* | Bulk density [kg/cm$^3$] |
|---|---|---|---|
| Ex 1 | 2.6 | 1 | 370 |
| Ex 2 | 2.8 | 2 | 75 |
| Ex 3 | 3.5 | 2 | 310 |
| Ex 4 | 4.1 | 2 | 420 |
| Ex 5 | 2.6 | 3 | 205 |
| Ex 6 | 2.7 | 2 | 240 |
| Ex 7 (Comp) | 2.0 | 5 | 220 |
| Ex 8 (Comp) | 2.4 | 5 | 245 |
| Ex 10 (Comp) | 1.7 | 2 | 240 |
| Ex 11 (Comp) | 1.9 | 3 | 280 |
| Ex 12 (Comp) | 1.9 | 3 | 390 |

*Fouling degree:
1 = no fouling; 2 = slight grey layer (reactor wall has a very fine layer of polymer sheeting the reactor); 3 = heavy grey layer (significant sheeting of the reactor); 4 = < 5 wt-% of the polymer is fouled material including heavy sheeting; 5 = < 10 wt-% of the polymer is fouled material including heavy sheeting

As can be seen from Table 3 productivity of the catalysts of the comparative examples is below 2.5 kg pol/g cat.h. Fouling was also high with comparative catalyst 8 and 8 having productivity 2.0 and 2.4. Instead productivity with catalysts of the invention was high and still less fouling could be seen. Bulk densities of the polymers produced with the catalysts of the invention were in general on a higher level with some exceptions.

**Claims**

1. Process for the preparation of a hafnium catalyst system comprising the steps of

(a) preparing a solution (A) comprising

(i) an organo-hafnium compound of formula (I)

$$L_2R_nHfX_2 \qquad (I)$$

wherein

"L" is an organic $\eta^5$-ligand,
"R" is a bridging group linking the organic ligands (L),
"X" is a ligand with a σ-bond to the hafnium (Hf),
"n" is 0, 1 or 2,

(ii) a cocatalyst (Co) comprising an element (E) of group 13 of the periodic table (IUPAC), preferably a cocatalyst (Co) comprising a compound of Al,
(iii) a solvent (A'),

wherein the mol ratio of the element (E) of the cocatalyst (Co) and hafnium of the organo-hafnium compound [E/Hf] in the solution (A) is in the range of 220/1 to 380/1,
(b) generating an emulsion by dispersing the solution (A) in a solvent (B) immiscible with said solution (A) and in the presence of a surfactant (S)

wherein

(i) the solvent (B) constitutes the continuous phase of the emulsion and
(ii) the solution (A) constitutes in form of droplets the dispersed phase of the emulsion,
(iii) the organo-hafnium compound of formula (I) and the cocatalyst (Co) are present in the droplets, and
(iv) the mol ratio of the element (E) of the cocatalyst (Co) and the surfactant "S" [E/S] in the emulsion is at least 60/1, and

(c) solidifying said dispersed phase to convert said droplets to solid particles and
(d) optionally recovering said particles to obtain said hafnium catalyst system.

2. Process according to claim 1, wherein the lignads (X) are independently selected from the group consisting of hydrogen, halogen, C1 to C20 alkyl, C1 to C20 alkoxy, C2 to C20 alkenyl, C2 to C20 alkynyl, C3 to C12 cycloalkyl, C6 to C20 aryl, C6 to C20 aryloxy, C7 to C20 arylalkyl, C7 to C20 arylalkenyl, -SR", -PR"$_3$, -SiR"$_3$, -OSiR"$_3$ and -NR"$_2$, wherein each R" is independently hydrogen, C1 to C20 alkyl, C2 to C20 alkenyl, C2 to C20 alkynyl, C3 to C12 cycloalkyl or C6 to C20 aryl.

3. Process according to claim 1 or 2, wherein at least one organic ligand (L), preferably both organic ligands (L), is (are independently) selected from the group consisting of unsubstituted cyclopentadienyl ligand, substituted cyclopentadienyl ligand, unsubstituted indenyl ligand, substituted indenyl ligand, unsubstituted fluorenyl ligand and substituted fluorenyl ligand.

4. Process according to anyone of the preceding claims, wherein at least one organic lignad (L), preferably both organic ligands (L), comprise(s) one or more residues independently selected from the group consisting of halogen, C1 to C10 alkyl, C2 to C20 alkenyl, C2 to C20 alkinyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl.

5. Process according to any one of the preceding claims, wherein the bridging group(s) (R) has(have) the formula (II)

$$-Y(R')_2- \qquad (II)$$

wherein

Y is C, Si or Ge, and
R' is $C_1$ to $C_{20}$ alkyl, $C_6$ to $C1_2$ aryl, $C_7$ to $C_{12}$ arylalkyl, or trimethylsilyl.

6. Process according to anyone of the preceding claims, wherein the organo-transition metal compound of formula (I) is (nBuCp)$_2$HfBz$_2$,
wherein
nBu = n-butyl,
Cp = cyclopentadienyl, and
Bz = benzyl.

7. Process according to anyone of the preceding claims, wherein the co-catalyst (Co) is a trialkylaluminium and/or aluminoxane compound.

8. Process according to anyone of the preceding claims, wherein the solvent (A') is an aromatic hydrocarbon, like toluene.

9. Process according to anyone of the preceding claims, wherein the solvent (B) is a perfluoroalkane.

10. Process according to anyone of the preceding claims, wherein the surfactant (S) is a perfluorinated hydrocarbon.

11. Process according to anyone of the preceding claims 1 to 9, wherein the surfactant (S) is obtained by a reaction between a surfactant precursor being a fluorinated $C_1$ to $C_{30}$ alcohol and a compound being identical to the compound used as the cocatalyst (Co).

**12.** Process according to anyone of the preceding claims, wherein the surfactant (S) is solved in the same solvent as used as solvent (B).

**13.** Process according to anyone of the preceding claims, wherein the surfactant (S) is added during the formation of the emulsion.

**14.** Process according to anyone of the preceding claims, wherein the solidifying is accomplished by a temperature change of more than 30 °C within less than 10 seconds.

**15.** Hafnium catalyst system obtainable by a process as defined in any one of the claims 1 to 14.

**16.** Hafnium catalyst system comprising

(a) an organo-hafnium compound of formula (I)

$$L_2R_nHfX_2 \qquad (I)$$

wherein

L is an organic $\eta^5$-ligand,
R is a bridging group linking the organic ligands (L),
X is a ligand with a $\sigma$-bond to the transition metal (M)
n is 0, 1 or 2,

and
(b) a cocatalyst comprising an element (Co) of group 13 of the periodic table (IUPAC),

wherein the hafnium catalyst system has a surface area of less than 25.0 $m^2$/g measured according to ASTM D 3663 and preferably

(i) an element (E) content of at least 29.0 wt.-%. and/or
(ii) a hafnium (Hf) content of at least 0.60 wt.-%

**17.** Hafnium catalyst system according to claim 15 or 16, wherein the hafnium catalyst system does not comprise any catalytically inert support material, such as organic and inorganic support materials, like silica, $MgCl_2$ or porous polymeric material.

**18.** Use of a hafnium catalyst system as defined in anyone of the claims 15 to 17 in polyethylene polymerisation.

Figure 1:    catalytic activity dependent on the used amounts of components and surfactant

Europäisches
Patentamt

European
Patent Office

Office européen
des brevets

## EUROPEAN SEARCH REPORT

Application Number

EP 08 16 8613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 03/051934 A (BOREALIS TECH OY [FI]; DENIFL PETER [AT]; VAN PRAET ERIK [SE]; BARTKE) 26 June 2003 (2003-06-26) * claim 33; examples 4,5 * | 1 | INV. C08F10/00 C08F4/6592 |
| Y | | 1-14 | |
| Y | EP 1 878 755 A (BOREALIS TECH OY [FI]) 16 January 2008 (2008-01-16) * page 14, paragraphs 144,149 * | 1-14 | |
| A | WO 2006/069733 A (BOREALIS TECH OY [FI]; BARTKE MICHAEL [FI]; DENIFL PETER [AT]) 6 July 2006 (2006-07-06) * page 22 - page 28; examples * | | |
| A | EP 1 847 552 A (BOREALIS TECH OY [FI]) 24 October 2007 (2007-10-24) * examples 3,4 * | 1-14 | |
| A | EP 1 741 725 A (BOREALIS TECH OY [FI]) 10 January 2007 (2007-01-10) * examples 1-4 * | 1-14 | |
| A | NENOV, SVETLIN ET AL NENOV, SVETLIN ET AL: "Metallocene- catalyzed polymerization in nonaqueous fluorous emulsion Metallocene- catalyzed polymerization in nonaqueous fluorous emulsion" MACROMOLECULAR CHEMISTRY AND PHYSICS , 208(13), 1362-1369 CODEN: MCHPES; ISSN: 1022-1352 MACROMOLECULAR CHEMISTRY AND PHYSICS , 208(13), 1362-1369 CODEN: MCHPES; ISSN: 1022-1352, 2007, XP008104508 * page 1366 * | 1-14 | |
| A | US 5 556 821 A (AIDA FUYUKI [JP] ET AL) 17 September 1996 (1996-09-17) * examples 1,5 * | 1-14 | |

TECHNICAL FIELDS
SEARCHED (IPC)

C08F

~~The present search report has been drawn up for all claims~~

| Place of search | Date of completion of the search | Examiner |
|---|---|---|
| The Hague | 26 May 2009 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

Application Number

EP 08 16 8613

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1 - 14

☐ The present supplementary European search report has been drawn up for those parts of the European patent application which relate to the invention first mentioned in the claims (Rule 164 (1) EPC).

<table>
<tr><td>Europäisches Patentamt<br>European Patent Office<br>Office européen des brevets</td><td>**LACK OF UNITY OF INVENTION**<br>**SHEET B**</td><td>Application Number<br><br>EP 08 16 8613</td></tr>
</table>

The Search Division considers that the present European patent application does not comply with the requirements of unity of invention and relates to several inventions or groups of inventions, namely:

1. claims: 1-14

   The subject matter of claims 1-14
   ---

2. claim: 15 (in full) and 18 (in part)

   the subject matter of claim 15 (in full) and 18 (in part)
   ---

3. claims: 16-18 (in part)

   the subject matter of claims 16-18 (in part) excluding the subject matter of claim 15
   ---

**ANNEX TO THE EUROPEAN SEARCH REPORT
ON EUROPEAN PATENT APPLICATION NO.**                  EP 08 16 8613

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2009

| Patent document cited in search report | | Publication date | Patent family member(s) | | Publication date |
|---|---|---|---|---|---|
| WO 03051934 | A | 26-06-2003 | AU | 2002366265 A1 | 30-06-2003 |
| | | | BR | 0214895 A | 14-12-2004 |
| | | | CA | 2468881 A1 | 26-06-2003 |
| | | | CN | 1871264 A | 29-11-2006 |
| | | | EP | 1323747 A1 | 02-07-2003 |
| | | | HU | 0402484 A2 | 29-03-2005 |
| | | | JP | 2005511866 T | 28-04-2005 |
| | | | TW | 229092 B | 11-03-2005 |
| | | | US | 2008275200 A1 | 06-11-2008 |
| | | | US | 2005054518 A1 | 10-03-2005 |
| | | | US | 2008064835 A1 | 13-03-2008 |
| EP 1878755 | A | 16-01-2008 | CN | 101479300 A | 08-07-2009 |
| | | | EP | 2041187 A2 | 01-04-2009 |
| | | | WO | 2008006609 A2 | 17-01-2008 |
| WO 2006069733 | A | 06-07-2006 | AU | 2005321510 A1 | 06-07-2006 |
| | | | BR | PI0519648 A2 | 14-07-2009 |
| | | | CN | 101111316 A | 23-01-2008 |
| | | | EA | 200701383 A1 | 28-02-2008 |
| | | | KR | 20070104895 A | 29-10-2007 |
| | | | US | 2009012247 A1 | 08-01-2009 |
| EP 1847552 | A | 24-10-2007 | CN | 101426819 A | 06-05-2009 |
| | | | EA | 200802002 A1 | 27-02-2009 |
| | | | WO | 2007118697 A1 | 25-10-2007 |
| | | | KR | 20080112372 A | 24-12-2008 |
| EP 1741725 | A | 10-01-2007 | CN | 101213219 A | 02-07-2008 |
| | | | EA | 200702652 A1 | 30-06-2008 |
| | | | WO | 2007006537 A1 | 18-01-2007 |
| | | | JP | 2009500479 T | 08-01-2009 |
| | | | KR | 20080015046 A | 15-02-2008 |
| | | | US | 2009208681 A1 | 20-08-2009 |
| US 5556821 | A | 17-09-1996 | DE | 4426122 A1 | 23-02-1995 |
| | | | JP | 7033821 A | 03-02-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03051934 A
- EP 1847552 A

- WO 9428034 A